# FASCICULE DE BREVET EUROPEEN

(11) **EP 4 172 514 B1**
(45) Date de publication et mention de la délivrance du brevet: **31.07.2024**
(21) Numéro de dépôt: 21734134.6
(22) Date de dépôt: 21.06.2021
(51) Int. Cl.: F16J 3/04, F16D 3/84, F16J 15/52, G01N 27/20

(54) **SOUFFLET DE PROTECTION POUR ARTICULATION MÉCANIQUE**
SCHUTZBALG FÜR MECHANISCHE VERBINDUNG
PROTECTIVE BELLOWS FOR MECHANICAL JOINT

(30) Priorité: 24.06.2020 FR 2006627
(43) Date de publication de la demande: 03.05.2023
(73) Titulaire: Commissariat à l'énergie atomique et aux énergies alternatives, 75015 Paris (FR)
(72) Inventeur: FENDLER, Manuel, 38054 GRENOBLE Cedex 09 (FR)
(74) Mandataire: INNOV-GROUP
(86) Numéro de dépôt international: PCT/EP2021/066884
(87) Numéro de publication internationale: WO 2021/259879

(56) Documents cités:
- JP-A- 2009 067 117
- JP-A- 2013 117 241
- US-A- 4 464 128

## Description

### DOMAINE TECHNIQUE

Le domaine technique est relatif à des soufflets de protection, en particulier destinés à être utilisés en tant qu'équipements de protection d'une articulation mécanique, par exemple dans des véhicules.

### ART ANTERIEUR

Le recours à des soufflets de protection est usuel dans des dispositifs mécaniques, les soufflets étant destinés à être disposés autour d'organes mécaniques considérés comme sensibles, par exemple une articulation entre deux pièces mobiles. La fonction d'un soufflet est de préserver l'intégrité du fonctionnement de l'organe, en l'isolant mécaniquement de l'environnement extérieur.

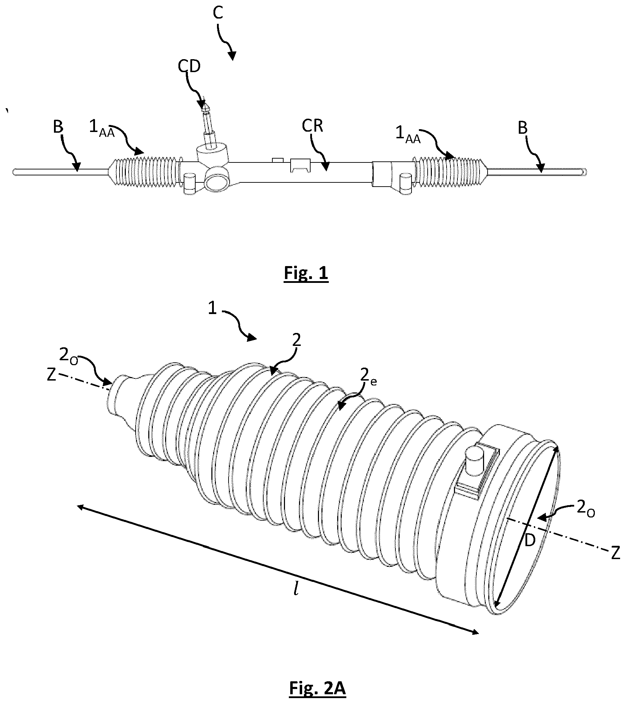

La figure 1 schématise par exemple des organes de direction d'un véhicule C. Elle est destinée à être reliée à une colonne de direction CD, cette dernière pouvant être actionnée en rotation par un volant non représenté. La colonne de direction comporte un pignon, ce dernier étant associé à une crémaillère CR. L'association pignon / crémaillère permet de transformer le mouvement de rotation de la colonne en mouvement de translation. En chacune de ses extrémités La crémaillère CR est reliée, par une liaison articulée, à une biellette de direction B. Chaque liaison articulée est protégée par un soufflet 1_{AA}. Ce dernier est un soufflet cylindrique, recouvrant les extrémités respectives de la crémaillère et de chaque biellette.

D'autres types d'articulation peuvent être protégées par un soufflet, par exemple les articulations d'un arbre moteur, ce dernier étant destiné à transmettre une puissance de traction à une roue.

D'une façon générale, un soufflet est utilisé pour protéger une articulation entre deux pièces mobiles, de façon à éviter que des poussières ou tout autre corps étranger entre en contact avec l'articulation. L'articulation peut être une articulation en rotation ou en translation. Généralement, un soufflet est un pièce cylindrique souple, de section circulaire ou polygonale, par exemple rectangulaire ou carrée. Le matériau composant un soufflet peut être un matériau plastique, par exemple un polymère de type PVC (Polychlorure de Vinyle), ou en polyuréthane. Il peut également s'agir de silicone, ou d'une toile pliée.

Durant l'utilisation, un soufflet de protection peut se dégrader, et être perforé ou devenir poreux. De ce fait, de l'eau peut pénétrer et s'accumuler à l'intérieur du soufflet, sans que sa présence ne soit aisément détectable. Une telle accumulation d'eau n'est pas souhaitable, en particulier si les organes protégés par le soufflet sont situés à proximité d'équipements électriques, ou si ils sont sensibles à la corrosion. L'objectif de l'invention est d'adresser ce problème, en permettant une détection simple d'une présence d'eau, ou d'un autre liquide conducteur, dans un soufflet de protection.

JP 2009 067117 A divulgue un soufflet selon le préambule de la revendication 1.

### EXPOSE DE L'INVENTION

Un premier objet de l'invention est un soufflet, destiné à recouvrir une articulation mécanique, le soufflet comportant une paroi latérale, cylindrique et ondulée, s'étendant autour d'un axe longitudinal, la paroi latérale comportant :
- une alternance de crêtes et de creux, formant des ondulations, chaque ondulation étant formée par deux crêtes s'étendant de part et d'autre d'un même creux, les crêtes étant plus proches de l'axe longitudinal que le creux ;
- des flancs, chaque flanc s'étendant entre une crête et un creux, chaque ondulation comportant un premier flanc et un deuxième flanc opposés, séparés par un même creux;
   la paroi latérale étant souple, de telle sorte que deux crêtes adjacentes et/ou deux creux adjacents peuvent se rapprocher ou s'éloigner l'un de l'autre, selon une direction parallèle à l'axe longitudinal ;
   le soufflet étant caractérisé en ce qu'il comprend un circuit électrique élémentaire associé à une ondulation, ou une pluralité de circuits électriques élémentaires, respectivement associés à différentes ondulations, le ou chaque circuit électrique élémentaire comportant :
      - un premier élément conducteur et un deuxième élément conducteur, s'étendant le long du premier flanc et/ou du deuxième flanc de l'ondulation, le long d'une face interne de la paroi latérale, le premier élément conducteur étant écarté du deuxième élément conducteur ;
      - une première piste conductrice et une deuxième piste conductrice, reliées respectivement au premier élément conducteur et au deuxième élément conducteur ;
le ou chaque circuit électrique élémentaire étant tel que :
- la première piste conductrice et la deuxième piste conductrice sont connectées, ou configurées pour être connectées à un détecteur de fermeture du circuit électrique élémentaire, de telle sorte que lorsqu'un liquide électriquement conducteur s'étend du premier élément conducteur jusqu'au deuxième élément conducteur, la fermeture du circuit électrique élémentaire soit détectée.

Selon un mode de réalisation, au moins un circuit électrique élémentaire associé à une ondulation est tel que
- le premier élément conducteur s'étend le long du premier flanc de l'ondulation;
- le deuxième élément conducteur s'étend le long du deuxième flanc de l'ondulation, opposé au premier flanc;
- le deuxième élément conducteur et/ou le premier élément conducteur s'étend à une distance non nulle du creux de l'ondulation.

Selon un mode de réalisation, au moins un circuit électrique élémentaire associé à une ondulation est tel que le premier élément conducteur et le deuxième élément conducteur s'étendent le long d'un même flanc de l'ondulation.

Le détecteur de fermeture relié au ou à chaque circuit électrique élémentaire peut être configuré pour :
- injecter un courant électrique dans le circuit électrique élémentaire et mesurer une différence de potentiel entre les pistes conductrices du circuit électrique élémentaire ;
- ou soumettre une différence de potentiel entre les pistes conductrices du circuit électrique élémentaire et mesurer une intensité d'un courant circulant dans le circuit électrique élémentaire.

Selon un mode de réalisation, le soufflet comporte plusieurs circuits électriques élémentaires. Au moins une crête, située entre deux ondulations adjacentes, est telle qu'un élément conducteur s'étend de part et d'autre de la crête, l'élément conducteur formant :
- un premier élément conducteur d'une ondulation adjacente à la crête ;
- un deuxième élément conducteur de l'autre ondulation adjacente à la crête.

Selon un mode de réalisation, dans le ou chaque circuit électrique élémentaire, une piste conductrice s'étend à partir d'une face externe de la paroi latérale, une liaison électrique entre la piste conductrice et un élément conducteur étant effectuée à travers la paroi latérale. La liaison électrique peut être effectuée, à travers la paroi latérale, par couplage capacitif.

Selon un mode de réalisation, les pistes conductrices d'au moins un circuit électrique élémentaire s'étendent, au moins en partie, le long de l'axe longitudinal, jusqu'au détecteur de fermeture du circuit électrique élémentaire, dans un espace interne délimité par la paroi latérale, le détecteur de fermeture du circuit électrique élémentaire étant situé dans l'espace interne ou en dehors de l'espace interne.

Selon un mode de réalisation, les pistes conductrices d'au moins un circuit électrique élémentaire s'étendent, au moins en partie, en dehors d'un espace interne, délimité par la paroi latérale, jusqu'à un détecteur de fermeture du circuit électrique élémentaire , ce dernier étant situé en dehors de l'espace interne.

Selon un mode de réalisation, la paroi latérale s'étend, le long de l'axe longitudinal, entre deux extrémités, une ouverture étant ménagée au niveau de chaque extrémité, autour de l'axe longitudinal, de façon à permettre une insertion d'un composant dans le soufflet.

Un deuxième objet de l'invention est une utilisation d'un soufflet selon le premier objet de l'invention, pour protéger une articulation entre deux composants mobiles l'un par rapport à l'autre, chaque composant étant, au moins en partie, inséré dans le soufflet.

Un troisième objet de l'invention est un procédé de détection de la présence d'un liquide conducteur dans un soufflet selon le premier objet de l'invention, le procédé comportant les étapes suivantes :
- raccordement des pistes conductrices d'un circuit élémentaire à un détecteur de fermeture dudit circuit élémentaire ;
- lorsque le détecteur de fermeture du circuit élémentaire génère un signal représentatif d'une fermeture, génération d'un signal d'alerte.

L'invention sera mieux comprise à la lecture de l'exposé des exemples de réalisation présentés, dans la suite de la description, en lien avec les figures listées ci-dessous.

### FIGURES

La figure 1 représente un exemple d'utilisation d'un soufflet de protection.
La figures 2A et 2B montrent des vues tridimensionnelles d'un soufflet de protection selon l'invention. Les figures 2C à 2E schématisent un premier mode de réalisation.
Les figures 3A à 3D montrent des configurations différentes de circuits électriques élémentaires.
La figure 4A représente un mode de réalisation selon lequel les pistes conductrices s'étendent, à l'intérieur du soufflet, vers un détecteur de fermeture de circuit électrique commun à différents circuits électriques élémentaires.
La figure 4B montre un mode de réalisation selon lequel les pistes conductrices s'étendent, à l'intérieur du soufflet, vers un détecteur de fermeture de circuit électrique élémentaire commun à différents circuits élémentaires, et disposé à l'extérieur du soufflet.
La figure 4C illustre un monde de réalisation selon lequel les pistes conductrices s'étendent à l'extérieur du soufflet.
Les figures 5A et 5B montrent deux variantes du mode de réalisation représenté sur la figure 4C, et permettant de transmettre un signal électrique à travers la paroi du soufflet.
La figure 6 illustre un mode de réalisation adapté à une orientation verticale du soufflet.

### EXPOSE DE MODES DE REALISATION PARTICULIERS

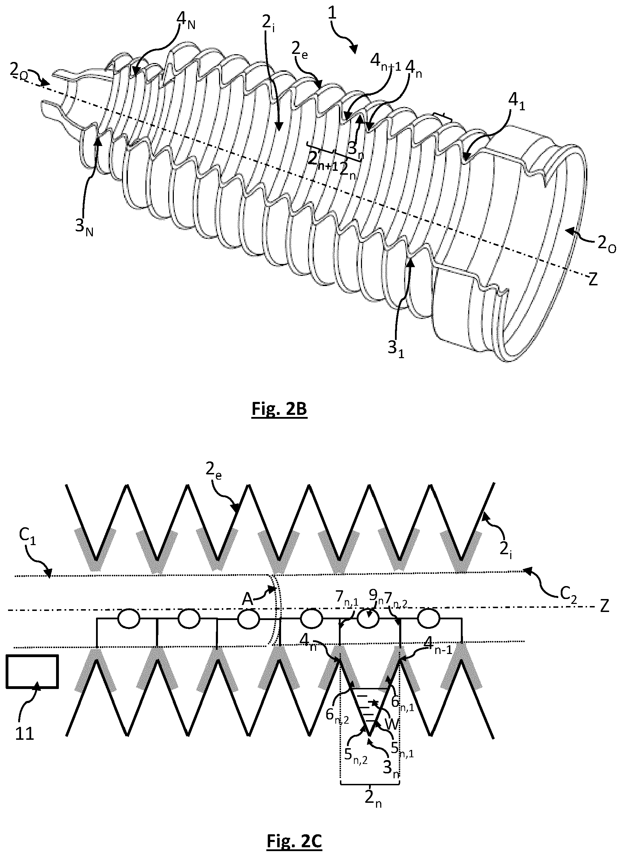

Les figures 2A et 2B sont des vues d'un exemple de soufflet de protection 1 selon l'invention. Le soufflet de protection 1 comporte une paroi latérale 2, cylindrique, s'étendant autour d'un axe longitudinal Z. La paroi latérale 2 comporte une face externe 2ₑ et une face interne 2ᵢ. Dans cet exemple, la section de la paroi latérale 2, perpendiculairement à l'axe longitudinal Z, est cylindrique de révolution. La paroi latérale 2 s'étend, le long de l'axe Z, entre deux extrémités formant des ouvertures 2₀. Les ouvertures 2ₒ sont destinées à permettre le passage respectif de deux composants C₁, C₂ mobiles l'un par rapport à l'autre autour d'une articulation A. Le diamètre des ouvertures 2ₒ est adapté au diamètre desdits composants destinés à être insérés dans le soufflet. Les composants C₁ et C₂ sont représentés en pointillés sur la figure 2C.

La figure 2B est une vue en écorché du soufflet 1. La paroi annulaire 2 est ondulée. Elle comporte une alternance de crêtes 4ₙ et de creux 3ₙ. L'indice n est un entier naturel désignant un rang de chaque crête ou de chaque creux, avec 1≤n≤N, N désignant un nombre total de crêtes ou de creux formant les ondulations de la paroi annulaire 2. Comme on peut le voir sur les figures 2B et 2C, chaque crête 4ₙ est plus proche de l'axe longitudinal Z que deux creux 3ₙ₋₁, 3ₙ lui étant adjacent. Le soufflet étant souple, deux creux adjacents 3ₙ₋₁, 3ₙ et/ou deux crêtes adjacentes 4ₙ. ₁, 4ₙ peuvent être rapprochés ou éloignés, parallèlement à l'axe longitudinal Z, durant l'utilisation du soufflet. La paroi latérale 2 est de préférence formée d'un matériau diélectrique, par exemple un des matériaux cités dans l'art antérieur.

La longueur *l* de la paroi latérale 2, selon l'axe longitudinal Z, est généralement comprise entre 10 cm et 30 ou 40 cm, voire davantage. Le diamètre *D* de la paroi latérale 2 varie du fait des ondulations formées par les crêtes et les creux. Il est par exemple compris entre 2 cm et 20 cm. Le diamètre dépend des dimensions des composants insérés dans le soufflet 1, à travers les ouvertures 2ₒ. L'épaisseur de la paroi latérale est faible, l'ordre de grandeur étant le millimètre ou quelques millimètres.

La figure 2C représente une vue en coupe d'une partie du soufflet 1 représenté sur la figure 2B. Sur la figure 2C, on a représenté un premier composant C₁ et un deuxième composant C₂, mobiles l'un par rapport à l'autre de part et d'autre une articulation A. Dans cet exemple, l'articulation A permet une rotation des composants l'un par rapport à l'autre, autour de l'axe longitudinal Z.

La paroi latérale comporte une série d'ondulations 2ₙ, chaque ondulation s'étendant entre deux crêtes successives 4ₙ, 4ₙ₋₁. Un creux 3ₙ et une crête 4ₙ successifs sont reliés par un flanc, ce dernier correspondant à une portion de la paroi latérale 2 reliant le creux 3ₙ et la crête 4ₙ. Une ondulation 2, comporte un premier flanc 5_{n,1} et un deuxième flanc 5_{n,2}, dits flancs opposés, s'étendant de part et d'autre d'un même creux 3ₙ. Chaque flanc s'étend selon une surface transversale à l'axe Z. Dans l'exemple représente, la surface de chaque flanc est ou s'approche d'une surface tronconique, autour de l'axe Z.

La face interne 2ᵢ de la paroi latérale 2 est instrumentée de façon à pouvoir détecter une présence d'eau ou d'un autre liquide conducteur W dans le soufflet. La présence d'eau dans le soufflet se traduit par une accumulation au niveau d'un creux, et cela d'autant plus que l'axe longitudinal Z est horizontal.

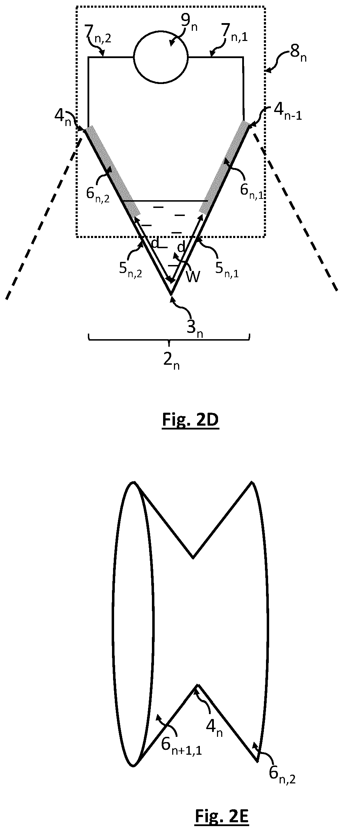

Dans l'exemple représenté sur la figure 2C, au niveau de chaque ondulation 2ₙ, la face interne 2ᵢ de la paroi latérale 2 comporte un premier élément conducteur 6_{n,1} et un deuxième élément conducteur 6_{n,2}, écarté du premier élément conducteur 6_{n,1}. Le premier élément conducteur 6_{n,1} est relié à une première piste conductrice 7_{n,1}. Le deuxième élément conducteur 6_{n,2} est relié à une deuxième piste conductrice 7_{n,2}. L'ensemble formé par les premier et deuxième éléments conducteurs et les premières et deuxièmes pistes conductrices forme un circuit électrique élémentaire 8ₙ. Le circuit électrique élémentaire 8ₙ est relié à chaque borne d'un détecteur 9ₙ configuré pour détecter une fermeture du circuit électrique élémentaire 8ₙ. La figure 2D est un détail de la figure 2C, montrant un circuit élémentaire 8ₙ associé à une ondulation 2ₙ.

Le détecteur 9ₙ est par exemple un ohmmètre. D'une façon générale, le détecteur 9ₙ peut être configuré pour injecter un courant électrique dans le circuit élémentaire 8ₙ, et pour mesurer une différence de potentiel entre les première et deuxième pistes conductrices 7_{n,1} et 7_{n,2}. Alternativement, le détecteur est configuré pour soumettre les première et deuxième pistes conductrices 7_{n,1} et 7_{n,2} à une différence de potentiel, et mesurer une intensité dans l'une des deux pistes conductrices. Lorsque de l'eau, ou un autre liquide conducteur W, s'accumule dans un creux 3ₙ, et s'étend du premier élément conducteur 6_{n,1} jusqu'au deuxième élément conducteur 6_{n,2}, le circuit électrique élémentaire se ferme, ce qui peut être détecté par le détecteur 9ₙ, par une mesure d'intensité dans une piste conductrice ou une absence de différence de potentiel entre les pistes conductrices. Le détecteur 9ₙ est relié à une unité de commande 11, permettant de générer un signal d'alerte lorsque une fermeture d'un circuit élémentaire est détectée.

Ainsi, le principe de fonctionnement de l'invention est une détection d'un liquide conducteur, dans une ondulation, comportant un circuit électrique élémentaire tel que précédemment décrit. Lorsque le liquide conducteur comble l'écart entre le premier élément conducteur 6_{n,1} et le deuxième élément conducteur 6_{n,2}, la présence de liquide conducteur est détectée par la fermeture du circuit électrique élémentaire 8ₙ.

Dans l'exemple représenté sur les figures 2C et 2D, à chaque ondulation 2ₙ est associé un circuit électrique élémentaire 8ₙ. Une telle configuration permet une détection de la présence d'eau dans le creux 3ₙ de chaque ondulation 2ₙ. Cela convient particulièrement à un soufflet 1 dont l'axe longitudinal est destiné à être maintenu horizontal, à 10° ou 20° près. Lorsqu'un soufflet est destiné à être incliné de façon plus importante, l'eau éventuellement présente dans un soufflet tend à s'écouler en direction de l'ouverture 2ₒ la plus basse. Dans un tel cas de figure, la ou les ondulations les plus proches de l'ouverture la plus basse peuvent être instrumentées de façon à pouvoir détecter une présence d'eau dans le soufflet, comme précédemment décrit.

Dans l'exemple décrit sur les figures 2C et 2D, chaque circuit élémentaire 8ₙ est tel que :
- un premier élément conducteur 6_{n,1}, s'étend le long du premier flanc 5_{n,1} de l'ondulation 2ₙ, à distance du creux 3ₙ de l'ondulation ;
- un deuxième élément conducteur 6_{n,2} s'étend le long du deuxième flanc 5_{n,2} de l'ondulation 2ₙ, à distance du creux 3ₙ de l'ondulation.

Dans cet exemple, le premier élément conducteur 6_{n,1} et le deuxième élément conducteur 6_{n,2} sont disposés à une même distance d du creux. La distance d définit une quantité minimale d'eau détectable dans l'ondulation. Plus la distance d est importante, plus la quantité minimale d'eau détectable est élevée. Dans une telle configuration, si la distance entre chaque élément conducteur et le creux est trop faible, le premier et le deuxième éléments conducteurs peuvent se toucher sous l'effet d'une déformation du soufflet, lorsque le premier flanc se rapproche du deuxième flanc. Le court-circuit qui en résulte induit une fausse détection de présence d'eau, ou faux positif.

Sur la figure 2E, on a représenté un élément conducteur élémentaire, selon l'exemple illustré sur les figures 2C et 2D. L'élément conducteur élémentaire épouse la forme de la paroi interne 2ᵢ, et prenant la forme d'un tronc conique de part et d'autre de la crête 4ₙ. L'élément conducteur élémentaire forme le deuxième élément conducteur 6_{n,2} d'une ondulation 2, et le premier élément conducteur 6_{n,+1} d'une ondulation 2ₙ₊₁.

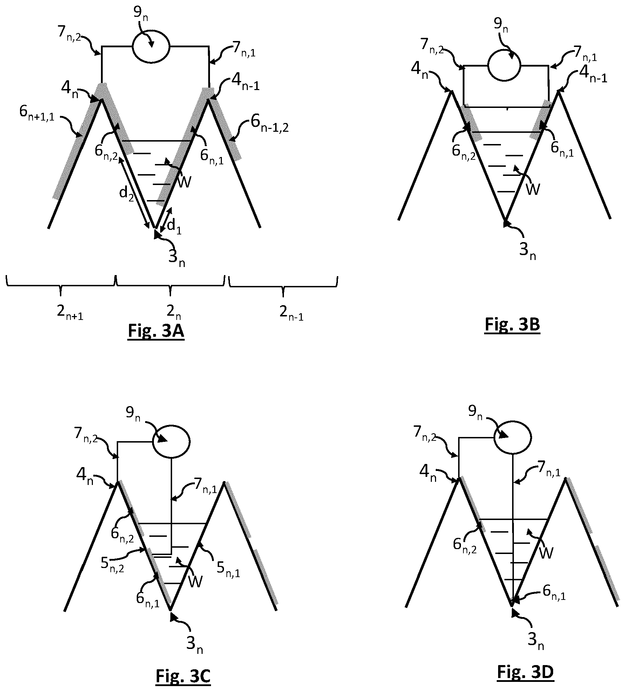

Les figures 3A à 3D représentent différentes dispositions possibles d'un premier élément conducteur 6_{n,1} et d'un deuxième élément conducteur 6_{n,2} d'un même circuit élémentaire 8ₙ. Sur la figure 3A, les premier et deuxième éléments conducteurs 6_{n,1} et 6_{n,2} s'étendent respectivement le long du premier flanc 5_{n,1} et du deuxième flanc 5_{n,2}. La distance d₂ entre le deuxième élément conducteur 6_{n,2} et le creux 3ₙ est supérieure à la distance d₁ entre le premier élément conducteur 6_{n,1} et le creux 3ₙ. Selon ce mode de réalisation, le premier élément conducteur 6_{n,1} peut s'étendre jusqu'au creux 3ₙ, auquel cas d₁ = 0.

Dans les modes de réalisation décrits sur les figures 2C et 3A, les premier et deuxième éléments conducteurs 6_{n,1} et 6_{n,2} s'étendent respectivement jusqu'aux crêtes 4ₙ, 4ₙ₋₁ délimitant l'ondulation 2ₙ. Le prolongement du premier élément conducteur 6_{n,1}, en deçà de la crête 4ₙ₋₁, permet de former un deuxième élément conducteur 6_{n-1,2} d'un circuit électrique élémentaire 8ₙ₋₁ associé à l'ondulation 2ₙ₋₁. Le prolongement du deuxième élément conducteur 6_{n,2}, au-delà de la crête 4ₙ, permet de former un premier élément conducteur 6_{n+1,1} d'un circuit électrique élémentaire 8ₙ₊₁ associé à l'ondulation 2ₙ₊₁. Ainsi, le dépôt d'une couche de matériau conducteur de part et d'autre d'une même crête 4ₙ permet de former simultanément un deuxième élément conducteur 6_{n,2} d'un circuit élémentaire associé à une ondulation 2ₙ, et un premier élément conducteur 6_{n+1,1} d'un circuit élémentaire associé à une ondulation suivante 2ₙ₊₁. Par ailleurs, selon un tel arrangement une même piste conductrice peut être utilisée dans deux circuits électriques élémentaires 8ₙ, 8ₙ₊₁ différents, respectivement associés aux ondulations 2ₙ et 2ₙ₊₁. Cela permet d'optimiser le nombre de pistes conductrices lorsque deux ondulations adjacentes sont instrumentées.

Dans le mode de réalisation représenté sur la figure 3B, les premier et deuxième éléments conducteurs 6_{n,1} et 6_{n,2} s'étendent entre le creux 3ₙ et les crêtes 4ₙ, 4ₙ₋₁ délimitant l'ondulation 2ₙ sans atteindre ces dernières. La position des premier et deuxième éléments conducteurs 6_{n,1} et 6_{n,2} détermine la quantité minimale de liquide conducteur détectable dans une ondulation 2ₙ.

Dans le mode de réalisation représenté sur la figure 3C, le premier et deuxième éléments conducteurs 6_{n,1} et 6_{n,2} s'étendent le long d'un même flanc, par exemple le deuxième flanc 5_{n,2}. Comme dans les modes de réalisation précédents, les premier et deuxième éléments conducteurs sont écartés l'un de l'autre. Le mode de réalisation présenté en lien avec la figure 3C permet d'éviter la formation d'un court-circuit pouvant apparaître lorsque les deux éléments conducteurs d'un même circuit élémentaire, s'étendant respectivement le long de deux flancs opposés, sont mis en contact sous l'effet d'un rapprochement trop important des deux flancs. La quantité minimale détectable dépend du positionnement de la séparation entre les deux éléments conducteurs. Selon une possibilité, représentée sur la figure 3D, le premier élément conducteur 6_{n,1} est formé d'un simple point de contact, au niveau du creux 3ₙ.

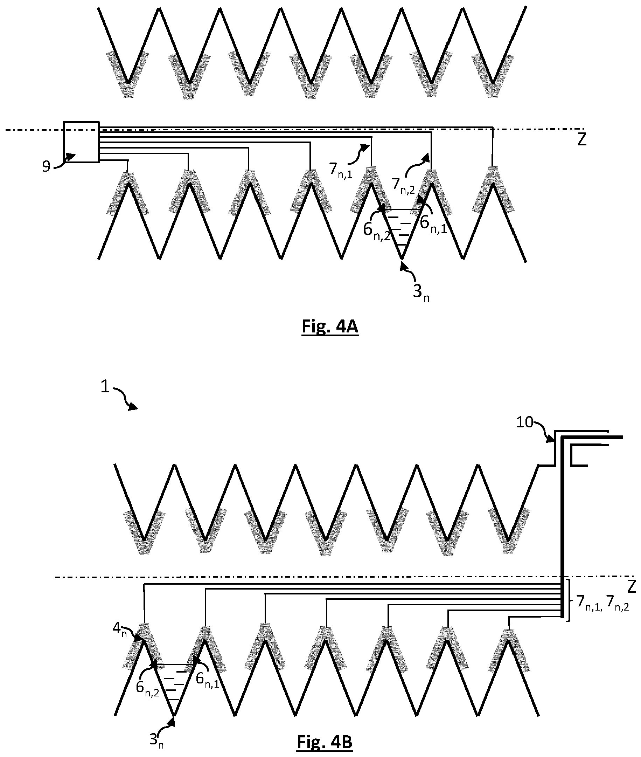

Comme préalablement indiqué, chaque circuit électrique élémentaire 8ₙ est relié à un détecteur de fermeture de circuit 9ₙ. Il peut être avantageux d'utiliser un détecteur de fermeture élémentaire 9 commun à plusieurs circuits électriques élémentaires. La figure 4A illustre une telle possibilité. Les pistes conductrices 7_{n,1}, 7_{n,2} de chaque circuit élémentaire 8ₙ aboutissent à un détecteur de fermeture de circuit 9 commun. Ce dernier peut être disposé à l'intérieur de la paroi latérale 2. Selon une possibilité représentée sur la figure 4B, le détecteur de fermeture 9 peut être situé à l'extérieur de la paroi latérale 2, voire à distance du soufflet. Selon une telle configuration, les pistes conductrices 7_{n,1}, 7_{n,2} de chaque circuit élémentaire 8ₙ s'étendent entre un élément conducteur et l'extérieur du soufflet, par exemple à travers un tube coudé 10 débouchant sur l'extérieur. Les pistes conductrices peuvent être configurées pour être raccordées à un détecteur de fermeture de circuit commun 9. Ce dernier peut être situé sur une baie électronique, à distance du soufflet.

Le recours à un détecteur de fermeture de circuit commun 9 à plusieurs circuits électriques élémentaires 8ₙ suppose que ce dernier puisse fonctionner par balayage, chaque circuit électrique élémentaire étant adressé selon une fréquence de balayage. La fréquence de balayage peut par exemple être de quelques Hz ou centaines de Hz.

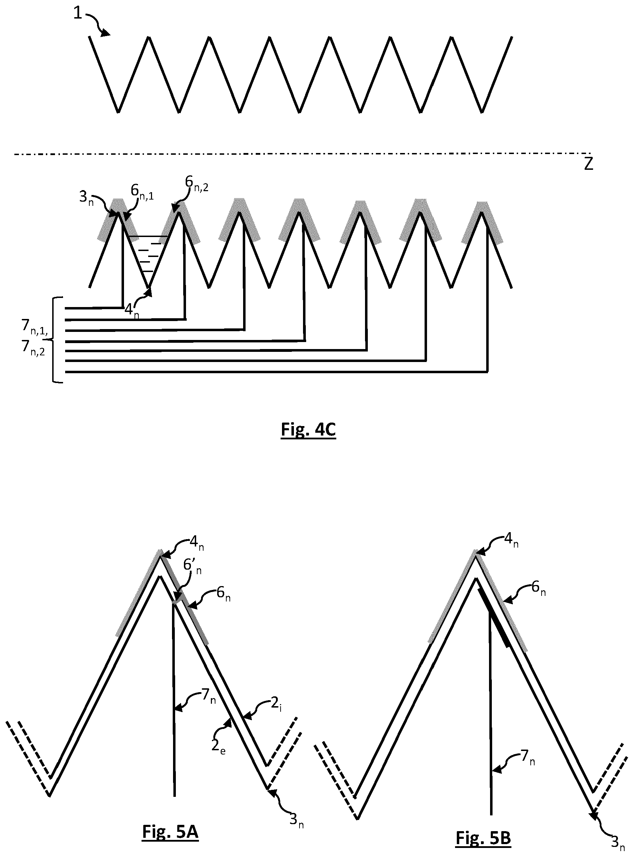

Dans les exemples précédemment commentés, les pistes conductrices 7_{n,1}, 7_{n,2} de chaque circuit élémentaire 8ₙ s'étendent, au moins en partie, dans l'espace interne délimité par la paroi latérale 2. La figure 4C schématise un mode de réalisation dans lequel les pistes conductrices s'étendent à l'extérieur de la paroi latérale 2. Cela réduit le risque de perturbation, par les pistes conductrices, des composants s'étendant à l'intérieur de la paroi latérale 2. Une telle configuration suppose une reprise de contact, au niveau de la face externe 2ₑ, pour transférer un courant électrique circulant dans un élément conducteur, à l'extérieur de la paroi latérale 2. Les figures 5A et 5B représentent deux façons d'obtenir une telle reprise de contact.

Sur la figure 5A, on a représenté une piste conductrice 7ₙ reliée à la face externe 2ₑ de la paroi latérale, et connectée, par une liaison transverse 6'ₙ à un élément conducteur 6, s'étendant le long de la face interne 2ᵢ. La référence 7ₙ désigne indifféremment une première piste conductrice et une deuxième piste conductrice. Il en est de même pour la référence 6ₙ, qui désigne un premier ou un deuxième élément conducteur. La liaison transverse 6'ₙ, ou via, est obtenue en disposant un matériau électriquement conducteur à travers la paroi latérale 2. La liaison transverse 6'ₙ et l'élément conducteur 6ₙ peuvent former un composant monolithique. Selon cette configuration, la piste conductrice 7ₙ est directement connectée à l'élément conducteur 6ₙ.

Sur la figure 5B, on a représenté une piste conductrice 7ₙ reliée à la face externe 2ₑ de la paroi latérale, par couplage capacitif. Par couplage capacitif, il est entendu un transfert de charges, par effet capacitif, entre la piste conductrice 7ₙ et un élément conducteur 6ₙ, à travers la paroi latérale 2, cette dernière étant constituée d'un matériau diélectrique.

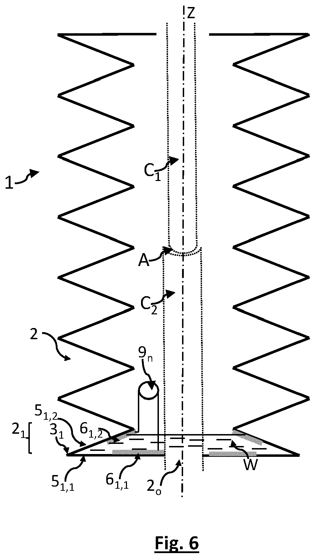

La figure 6 schématise une utilisation du soufflet alors que l'axe transversal est orienté verticalement. L'eau éventuellement contenue à l'intérieur du soufflet s'accumule, par gravité, vers l'ouverture 2ₒ la plus basse. Dans une telle configuration, une seule ondulation peut être instrumentée : il peut s'agir de l'ondulation 2₁ adjacente de l'ouverture 2ₒ formant une partie basse de la paroi latérale 2. L'ouverture est délimitée par une lèvre 5_{1,1}, formant un premier flanc d'une première ondulation 2₁. La première ondulation 2₁ comporte la lèvre 5_{1,1} et un deuxième flanc 5_{1,2}, opposé à la lèvre par rapport à un premier creux 3₁.

Quel que soit le mode de réalisation, chaque élément conducteur peut être formé par un dépôt local d'un matériau conducteur, par exemple un métal, sur la face interne 2ᵢ de la paroi latérale 2. La formation d'un élément conducteur peut comporter une fonctionnalisation d'une partie de la face interne, s'étendant au voisinage d'une crête, ou de chaque crête, de façon à augmenter localement la mouillabilité. La fonctionnalisation peut résulter d'une silanisation (i-e dépôt d'une couche de silane) sur ladite partie fonctionnalisée. Il peut par exemple s'agir d'une couche d'hexaméthyldsilazane (HMDS), déposée par spray. Suite à la fonctionnalisation, visant à augmenter localement la mouillabilité, la face interne peut être plongée dans une solution comportant des ions métalliques, par exemple CuSO₄. Lors du retrait de la face interne de la solution, la solution se dépose principalement sur chaque partie fonctionnalisée, entraînant un dépôt de cuivre. De façon alternative, chaque élément conducteur peut résulter de l'application d'un adhésif conducteur sur la face interne 2ᵢ, ou d'un autre moyen d'enduction ou d'imprégnation locale d'un matériau conducteur.

Le soufflet tel que précédemment décrit est destiné à être utilisé alors que deux composants, articulés l'un par rapport à l'autre, sont insérés dans l'espace interne délimité par la paroi latérale. Suite au raccordement d'un circuit élémentaire 8ₙ à un détecteur de fermeture 9ₙ, ce dernier effectue un contrôle périodique de la fermeture du circuit élémentaire. Lorsqu'une fermeture est détectée, le détecteur de fermeture adresse un signal représentatif de la fermeture à une unité de commande 11, cette dernière générant un signal d'alerte, destiné à informer un utilisateur d'une présence potentielle de liquide conducteur dans le soufflet.

L'invention pourra être utilisée dans différents véhicules ou équipements industriels dans lesquels une articulation entre deux composants articulés doit être protégée. Comme précédemment évoqué, il peut s'agir d'organes de traction ou de direction d'un véhicule, ou une prise de force d'un tracteur ou engin de chantier, ou un équipement industriel à poste fixe.

## Revendications

1. Soufflet (1), destiné à recouvrir une articulation mécanique (A), le soufflet comportant une paroi latérale (2), cylindrique et ondulée, s'étendant autour d'un axe longitudinal (Z), la paroi latérale comportant :
- une alternance de crêtes (4ₙ) et de creux (3ₙ), formant des ondulations (2ₙ), chaque ondulation étant formée par deux crêtes s'étendant de part et d'autre d'un même creux, les crêtes étant plus proches de l'axe longitudinal que le creux ;
- des flancs (5_{n,1}, 5_{n,2}), chaque flanc s'étendant entre une crête et un creux, chaque ondulation (2ₙ) comportant un premier flanc (5_{n,1}) et un deuxième flanc (5_{n,2}) opposés, séparés par un même creux (3ₙ);
la paroi latérale (2) étant souple, de telle sorte que deux crêtes adjacentes (4ₙ, 4ₙ₊₁) et/ou deux creux adjacents (3ₙ, 3ₙ₊₁) peuvent se rapprocher ou s'éloigner l'un de l'autre, selon une direction parallèle à l'axe longitudinal ;
le soufflet étant **caractérisé en ce qu'**il comprend, un circuit électrique élémentaire (8ₙ) associé à une ondulation (2ₙ), ou une pluralité de circuits électriques élémentaires, respectivement associés à différentes ondulations, le ou chaque circuit électrique élémentaire comportant :
- un premier élément conducteur (6_{n,1}) et un deuxième élément conducteur (6_{n,2}), s'étendant le long du premier flanc (5_{n,1}) et/ou du deuxième flanc (5_{n,2}) de l'ondulation, le long d'une face interne (2ᵢ) de la paroi latérale, le premier élément conducteur étant écarté du deuxième élément conducteur ;
- une première piste conductrice (7_{n,1}) et une deuxième piste conductrice (7_{n,2}), reliées respectivement au premier élément conducteur (6_{n,1}) et au deuxième élément conducteur (6_{n,2});
le ou chaque circuit électrique élémentaire étant tel que :
- la première piste conductrice et la deuxième piste conductrice sont connectées, ou configurées pour être connectées à un détecteur de fermeture du circuit électrique élémentaire (9ₙ, 9), de telle sorte que lorsqu'un liquide électriquement conducteur (W) s'étend du premier élément conducteur (6_{n,1}) jusqu'au deuxième élément conducteur (6_{n,2}), la fermeture du circuit électrique élémentaire soit détectée.

2. Soufflet selon la revendication 1, dans lequel au moins un circuit électrique élémentaire (8ₙ) associé à une ondulation (2ₙ) est tel que
- le premier élément conducteur (6_{n,1}) s'étend le long du premier flanc (5_{n,1}) de l'ondulation;
- le deuxième élément conducteur (6_{n,2}) s'étend le long du deuxième flanc (5_{n,2}) de l'ondulation, opposé au premier flanc;
- le deuxième élément conducteur et/ou le premier élément conducteur s'étend à une distance (d₁, d₂) non nulle du creux (3ₙ) de l'ondulation.

3. Soufflet selon la revendication 1, dans lequel au moins un circuit électrique élémentaire (8ₙ) associé à une ondulation (2ₙ) est tel que le premier élément conducteur (6_{n,1}) et le deuxième élément conducteur (6_{n,2}) s'étendent le long d'un même flanc (5_{n,1}, 5_{n,2}) de l'ondulation.

4. Soufflet selon l'une quelconque des revendications précédentes, dans lequel le détecteur de fermeture (9, 9ₙ) relié au ou à chaque circuit électrique élémentaire est configuré pour :
- injecter un courant électrique dans le circuit électrique élémentaire et mesurer une différence de potentiel entre les pistes conductrices (7_{n,1}, 7_{n,2}) du circuit électrique élémentaire ;
- ou soumettre une différence de potentiel entre les pistes conductrices du circuit électrique élémentaire et mesurer une intensité d'un courant circulant dans le circuit électrique élémentaire.

5. Soufflet selon l'une quelconque des revendications précédentes, comportant plusieurs circuits électriques élémentaires (8ₙ), et dans lequel au moins une crête (4ₙ), située deux entre ondulations adjacentes (2ₙ, 2ₙ₊₁), est telle qu'un élément conducteur s'étend de part et d'autre de la crête, l'élément conducteur formant :
- un premier élément conducteur (6_{1,n+1}) d'une ondulation (2ₙ₊₁) adjacente à la crête ;
- un deuxième élément conducteur (6_{2,n}) de l'autre ondulation (2ₙ) adjacente à la crête.

6. Soufflet selon l'une quelconque des revendications précédentes, dans lequel, dans le ou chaque circuit électrique élémentaire (8ₙ), une piste conductrice (7_{n,1}, 7_{n,2}) s'étend à partir d'une face externe (2ₑ) de la paroi latérale, une liaison électrique entre la piste conductrice et un élément conducteur étant effectuée à travers la paroi latérale (2).

7. Soufflet selon la revendication 6, dans lequel la liaison électrique est effectuée, à travers la paroi latérale (2), par couplage capacitif.

8. Soufflet selon l'une quelconque des revendications 1 à 5, dans lequel les pistes conductrices (7_{n,1}, 7_{n,2}) d'au moins un circuit électrique élémentaire (8ₙ) s'étendent, au moins en partie, le long de l'axe longitudinal (Z), jusqu'au détecteur de fermeture du circuit électrique élémentaire (9, 9ₙ), dans un espace interne délimité par la paroi latérale (2), le détecteur de fermeture du circuit électrique élémentaire étant situé dans l'espace interne ou en dehors de l'espace interne.

9. Soufflet selon l'une quelconque des revendications 1 à 7, dans lequel les pistes conductrices (7_{1,n}, 7_{n,2}) d'au moins un circuit électrique élémentaire (8ₙ) s'étendent, au moins en partie, en dehors d'un espace interne, délimité par la paroi latérale (2), jusqu'au détecteur de fermeture du circuit électrique élémentaire (9, 9ₙ), ce dernier étant situé en dehors de l'espace interne.

10. Soufflet selon l'une quelconque des revendications précédentes, dans lequel la paroi latérale (2) s'étend, le long de l'axe longitudinal (Z), entre deux extrémités, une ouverture (2ₒ) étant ménagée au niveau de chaque extrémité, autour de l'axe longitudinal (Z), de façon à permettre une insertion d'un composant (C₁, C₂) dans le soufflet.

11. Utilisation d'un soufflet (1) selon l'une quelconque des revendications précédentes pour protéger une articulation (A) entre deux composants mobiles (C₁, C₂) l'un par rapport à l'autre, chaque composant étant, au moins en partie, inséré dans le soufflet.

12. Procédé de détection de la présence d'un liquide conducteur dans un soufflet (1) selon l'une quelconque des revendications 1 à 10, le procédé comportant les étapes suivantes :
- raccordement des pistes conductrices (7_{n,1}, 7_{n,2}) d'un circuit élémentaire (8ₙ) à un détecteur de fermeture (9, 9ₙ) dudit circuit élémentaire ;
- lorsque le détecteur de fermeture du circuit élémentaire génère un signal représentatif d'une fermeture, génération d'un signal d'alerte.

## Patentansprüche

1. Balg (1), der dazu bestimmt ist, eine mechanische Verbindung (A) zu umhüllen, wobei der Balg eine zylindrische und gewellte Seitenwand (2) aufweist, die sich um eine Längsachse (Z) erstreckt, wobei die Seitenwand Folgendes umfasst:
- eine wechselnde Abfolge von Bergen (4ₙ) und Tälern (3ₙ), die Wellen (2ₙ) bilden, wobei jede Welle aus zwei Bergen gebildet ist, die sich zu beiden Seiten eines gleichen Tals erstrecken, wobei sich die Berge näher an der Längsachse befinden als die Täler;
- Flanken (5_{n,1}, 5_{n,2}), wobei sich jede Flanke zwischen einem Berg und einem Tal erstreckt, wobei jede Welle (2ₙ) eine erste Flanke (5_{n,1}) und eine gegenüberliegende zweite Flanke (5_{n,2}) umfasst, die durch ein gleiches Tal (3ₙ) voneinander getrennt sind; wobei die Seitenwand (2) flexibel ist, sodass sich zwei benachbarte Berge (4ₙ, 4ₙ₊₁) und/oder zwei benachbarte Täler (3ₙ, 3ₙ₊₁) gemäß einer zu der Längsachse parallelen Richtung einander annähern oder voneinander entfernen können;
wobei der Balg **dadurch gekennzeichnet ist, dass** er einen elementaren Stromkreis (8ₙ), der mit einer Welle (2ₙ) assoziiert ist, oder eine Vielzahl von elementaren Stromkreisen, die jeweils mit unterschiedlichen Wellen assoziiert sind, beinhaltet, wobei der oder jeder elementare Stromkreis Folgendes umfasst:
- ein erstes leitendes Element (6_{n,1}) und ein zweites leitendes Element (6_{n,2}), die sich entlang der ersten Flanke (5_{n,1}) und/oder entlang der zweiten Flanke (5_{n,2}) der Welle entlang einer Innenseite (2ᵢ) der Seitenwand erstrecken, wobei das erste leitende Element von dem zweiten leitenden Element beabstandet ist;
- eine erste Leiterbahn (7_{n,1}) und eine zweite Leiterbahn (7_{n,2}), die an das erste leitende Element (6_{n,1}) bzw. das zweite leitende Element (6_{n,2}) angeschlossen sind; wobei der oder jeder elementare Stromkreis derart ist, dass:
- die erste Leiterbahn und die zweite Leiterbahn mit einem Schließdetektor für den elementaren Stromkreis (9ₙ, 9) verbunden sind oder dazu konfiguriert sind, mit diesem verbunden zu sein, sodass, wenn sich eine elektrisch leitende Flüssigkeit (W) von dem ersten leitenden Element (6_{n,1}) bis zu dem zweiten leitenden Element (6_{n,2}) erstreckt, die Schließung des elementaren Stromkreises detektiert wird.

2. Balg nach Anspruch 1, wobei mindestens ein elementarer Stromkreis (8ₙ), der mit einer Welle (2ₙ) assoziiert ist, derart ist, dass
- sich das erste leitende Element (6_{n,1}) entlang der ersten Flanke (5_{n,1}) der Welle erstreckt;
- sich das zweite leitende Element (6_{n,2}) entlang der zweiten Flanke (5_{n,2}) der Welle, die der ersten Flanke gegenüberliegt, erstreckt;
- sich das zweite leitende Element und/oder das erste leitende Element in einem Abstand (d₁, d₂) ungleich Null von dem Tal (3ₙ) der Welle erstreckt.

3. Balg nach Anspruch 1, wobei mindestens ein elementarer Stromkreis (8ₙ), der mit einer Welle (2ₙ) assoziiert ist, derart ist, dass sich das erste leitende Element (6_{n,1}) und das zweite leitende Element (6_{n,2}) entlang einer gleichen Flanke (5_{n,1}, 5_{n,2}) der Welle erstrecken.

4. Balg nach einem beliebigen der vorhergehenden Ansprüche, wobei der Schließdetektor (9, 9ₙ), der an den oder jeden elementaren Stromkreis angeschlossen ist, zu Folgendem konfiguriert ist:
- Einspeisen eines elektrischen Stroms in den elementaren Stromkreis und Messen einer Potenzialdifferenz zwischen den Leiterbahnen (7_{n,1}, 7_{n,2}) des elementaren Stromkreises;
- oder Erzeugen einer Potenzialdifferenz zwischen den Leiterbahnen des elementaren Stromkreises und Messen einer Stärke eines Stroms, der in dem elementaren Stromkreis fließt.

5. Balg nach einem beliebigen der vorhergehenden Ansprüche, der mehrere elementare Stromkreise (8ₙ) umfasst, und wobei mindestens ein Berg (4ₙ), der sich zwischen zwei benachbarten Wellen (2ₙ, 2ₙ₊₁) befindet, derart ist, dass sich ein leitendes Element zu beiden Seiten des Bergs erstreckt, wobei das leitende Element Folgendes bildet:
- ein erstes leitendes Element (6_{1,n+1}) einer Welle (2ₙ₊₁), die zu dem Berg benachbart ist;
- ein zweites leitendes Element (6_{2,n}) der anderen Welle (2ₙ), die zu dem Berg benachbart ist.

6. Balg nach einem beliebigen der vorhergehenden Ansprüche, wobei sich in dem oder jedem elementaren Stromkreis (8ₙ) eine Leiterbahn (7_{n,1}, 7_{n,2}) von einer Außenseite (2ₑ) der Seitenwand erstreckt, wobei eine elektrische Verbindung zwischen der Leiterbahn und einem leitenden Element durch die Seitenwand (2) hindurch erfolgt.

7. Balg nach Anspruch 6, wobei die elektrische Verbindung durch die Seitenwand (2) hindurch durch kapazitive Kopplung erfolgt.

8. Balg nach einem beliebigen der Ansprüche 1 bis 5, wobei sich die Leiterbahnen (7_{n,1}, 7_{n,2}) von mindestens einem elementaren Stromkreis (8ₙ) mindestens teilweise entlang der Längsachse (Z) bis zu dem Schließdetektor des elementaren Stromkreises (9, 9ₙ) in einem Innenraum, der durch die Seitenwand (2) begrenzt wird, erstrecken, wobei sich der Schließdetektor des elementaren Stromkreises innerhalb des Innenraums oder außerhalb des Innenraums befindet.

9. Balg nach einem beliebigen der Ansprüche 1 bis 7, wobei sich die Leiterbahnen (7_{1,n}, 7_{n,2}) von mindestens einem elementaren Stromkreis (8ₙ) mindestens teilweise außerhalb eines Innenraums, der durch die Seitenwand (2) begrenzt wird, bis zu dem Schließdetektor des elementaren Stromkreises (9, 9ₙ) erstrecken, wobei sich letzterer außerhalb des Innenraums befindet.

10. Balg nach einem beliebigen der vorhergehenden Ansprüche, wobei sich die Seitenwand (2) entlang der Längsachse (Z) zwischen zwei Enden erstreckt, wobei an jedem Ende eine Öffnung (2ₒ) um die Längsachse (Z) eingerichtet ist, um ein Einführen einer Komponente (C₁, C₂) in den Balg zu gestatten.

11. Verwendung eines Balgs (1) nach einem beliebigen der vorhergehenden Ansprüche zum Schutz einer Verbindung (A) zwischen zwei Komponenten (C₁, C₂), die in Bezug aufeinander beweglich sind, wobei jede Komponente mindestens teilweise in den Balg eingeführt ist.

12. Verfahren zur Detektion des Vorhandenseins einer leitenden Flüssigkeit in einem Balg (1) nach einem beliebigen der Ansprüche 1 bis 10, wobei das Verfahren die folgenden Schritte umfasst:
- Anschließen der Leiterbahnen (7_{n,1}, 7_{n,2}) eines elementaren Kreises (8ₙ) an einen Schließdetektor (9, 9ₙ) des elementaren Kreises;
- wenn der Schließdetektor des elementaren Kreises ein Signal generiert, das für eine Schließung repräsentativ ist, Generieren eines Warnsignals.

## Claims

1. A bellows (1), intended to cover a mechanical joint (A), the bellows comprising a cylindrical and corrugated side wall (2), extending about a longitudinal axis (Z), the side wall comprising:
- an alternation of crests (4ₙ) and of troughs (3ₙ), forming corrugations (2ₙ), each corrugation being formed by two crests extending on either side of one and the same trough, the crests being closer to the longitudinal axis than the trough;
- flanks (5_{n,1}, 5_{n,2}), each flank extending between a crest and a trough, each corrugation (2ₙ) comprising a first flank (5_{n,1}) and a second flank (5_{n,2}) that are opposite, separated by a same trough (3ₙ);
the side wall (2) being flexible, such that two adjacent crests (4ₙ, 4ₙ₊₁) and/or two adjacent troughs (3ₙ, 3ₙ₊₁) can converge or move apart from one another, in a direction parallel to the longitudinal axis;
the bellows being **characterized in that** it comprises an elementary electrical circuit (8ₙ) associated with a corrugation (2ₙ), or a plurality of elementary electrical circuits, respectively associated with different corrugations, the or each elementary electrical circuit comprising:
- a first conductive element (6_{n,1}) and a second conductive element (6_{n,2}), extending along the first flank (5_{n,1}) and/or the second flank (5_{n,2}) of the corrugation, along an inner face (2ᵢ) of the side wall, the first conductive element being separated from the second conductive element;
- a first conductive track (7_{n,1}) and a second conductive track (7_{n,2}), linked respectively to the first conductive element (6_{n,1}) and to the second conductive element (6_{n,2});
the or each elementary electrical circuit being such that:
- the first conductive track and the second conductive track are connected, or configured to be connected, to a detector of closure of the elementary electrical circuit (9ₙ, 9), such that when an electrically conductive liquid (W) extends from the first conductive element (6_{n,1}) to the second conductive element (6_{n,2}), the closure of the elementary electrical circuit is detected.

2. The bellows as claimed in claim 1, wherein at least one elementary electrical circuit (8ₙ) associated with a corrugation (2ₙ) is such that
- the first conductive element (6_{n,1}) extends along the first flank (5_{n,1}) of the corrugation;
- the second conductive element (6_{n,2}) extends along the second flank (5_{n,2}) of the corrugation, opposite the first flank;
- the second conductive element and/or the first conductive element extends at a non-zero distance (d₁, d₂) from the trough (3ₙ) of the corrugation.

3. The bellows as claimed in claim 1, wherein at least one elementary electrical circuit (8ₙ) associated with a corrugation (2ₙ) is such that the first conductive element (6_{n,1}) and the second conductive element (6_{n,2}) extend along a same flank (5_{n,1}, 5_{n,2}) of the corrugation.

4. The bellows as claimed in any one of the preceding claims, wherein the closure detector (9, 9ₙ) linked to the or each elementary electrical circuit is configured to:
- inject an electrical current into the elementary electrical circuit and measure a potential difference between the conductive tracks (7_{n,1}, 7_{n,2}) of the elementary electrical circuit;
- or submit a potential difference between the conductive tracks of the elementary electrical circuit and measure an intensity of a current flowing in the elementary electrical circuit.

5. The bellows as claimed in any one of the preceding claims, comprising several elementary electrical circuits (8ₙ), and wherein at least one crest (4ₙ), situated between two adjacent corrugations (2ₙ, 2ₙ₊₁), is such that a conductive element extends on either side of the crest, the conductive element forming:
- a first conductive element (6_{1,n+1}) of a corrugation (2ₙ₊₁) adjacent to the crest;
- a second conductive element (6_{2,n}) of the other corrugation (2ₙ) adjacent to the crest.

6. The bellows as claimed in any one of the preceding claims, wherein, in the or each elementary electrical circuit (8ₙ), a conductive track (7_{n,1}, 7_{n,2}) extends from an outer face (2ₑ) of the side wall, an electrical link between the conductive track and a conductive element being made through the side wall (2).

7. The bellows as claimed in claim 6, wherein the electrical link is made, through the side wall (2), by capacitive coupling.

8. The bellows as claimed in any one of claims 1 to 5, wherein the conductive tracks (7_{n,1}, 7_{n,2}) of at least one elementary electrical circuit (8ₙ) extend, at least partly, along the longitudinal axis (Z), to the detector of closure of the elementary electrical circuit (9, 9ₙ), in an internal space delimited by the side wall (2), the detector of closure of the elementary electrical circuit being situated in the internal space or outside of the internal space.

9. The bellows as claimed in any one of claims 1 to 7, wherein the conductive tracks (7_{n,1}, 7_{n,2}) of at least one elementary electrical circuit (8ₙ) extend, at least partly, outside of an internal space, delimited by the side wall (2), to the detector of closure of the elementary electrical circuit (9, 9ₙ), the latter being situated outside of the internal space.

10. The bellows as claimed in any one of the preceding claims, wherein the side wall (2) extends, along the longitudinal axis (Z), between two ends, an aperture (2ₒ) being formed at each end, about the longitudinal axis (Z), so as to allow an insertion of a component (C₁, C₂) into the bellows.

11. The use of a bellows (1) as claimed in any one of the preceding claims to protect a joint (A) between two components (C₁, C₂) that are movable with respect to one another, each component being, at least partly, inserted into the bellows.

12. A method for detecting the presence of a conductive liquid in a bellows (1) as claimed in any one of claims 1 to 10, the method comprising the following steps:
- connection of the conductive tracks (7_{n,1}, 7_{n,2}) of an elementary circuit (8ₙ) to a detector (9, 9ₙ) of closure of said elementary circuit;
- when the detector of closure of the elementary circuit generates a signal representative of a closure, generation of an alert signal.
